**Europäisches Patentamt**

**European Patent Office**

**Office européen des brevets**

(11) Publication number: **0 194 738**

**A1**

## EUROPEAN PATENT APPLICATION

(21) Application number: **86300458.6**

(22) Date of filing: **23.01.86**

(51) Int. Cl.4: **H04B 3/23**

(30) Priority: **14.03.85 CA 476581**

(43) Date of publication of application:
**17.09.86 Bulletin 86/38**

(84) Designated Contracting States:
**AT DE FR GB IT NL SE**

(71) Applicant: **NORTHERN TELECOM LIMITED**
**600 de la Gauchetiere Street West**
**Montreal Quebec H3B 4N7(CA)**

(72) Inventor: **Arnon, Ephraim**
**168 Withrow Avenue**
**Nepean Ontario, K2G 3N7(CA)**
Inventor: **Chomik, Michael Wayne**
**30 Eleanor Drive Apt. No. 107**
**Nepean Ontario, K2E 7E5(CA)**
Inventor: **Roman, Vincent George**
**328 Beverly Street**
**Stittsville Ontario, K0A 3G0(CA)**

(74) Representative: **Crawford, Andrew Birkby et al**
**A.A. THORNTON & CO. Northumberland House**
**303-306 High Holborn**
**London WC1V 7LE(GB)**

(54) **Multi-stage echo canceller.**

(57) In an echo canceller for use in full duplex, two-wire, digital transmission systems, satisfactory operation at higher bit rates (144 Kb/second and above) is achieved by at least two adaptive filter stages (1;2) operating in tandem. In preferred embodiments, each stage comprises a random access memory (RAM) (32; 34), a digital/analogue converter (38; 40) and differencing means (42; 44). In each stage, each sequence of bits in the transmitted signal address the RAM (32; 34) which outputs a corresponding digital word to the digital/analogue converter (38; 40). The corresponding analogue signal from the digital/analogue converter is subtracted from the received signal. The difference signal so obtained is used to update the digital word in the RAM so as to approximate the echo more closely when the particular sequence recurs. The second stage digital/analogue converter (40) has an output range much smaller than that (38) of the first stage, preferably about equal to the minimum gradation of the first stage digital/analogue converter (38). Consequently the first stage performs coarse cancellation of the echo and the second stage then further reduces the residual. To enable such further reduction, the updating of the RAM in the first stage is "frozen" once that stage has converged.

FIG. 1

# MULTI-STAGE ECHO CANCELLER

This invention relates to echo cancellers for use in full duplex, two-wire digital transmission systems.

In such a system, at each end of a two-wire transmission line a transmitter and a receiver are coupled by means of a hybrid. Theoretically, although the transmitter and receiver operate at the same time, the hybrid ensures that the transmitted signal goes out onto the line and only the far end signal (that which was transmitted onto the line at the far end) reaches the receiver. In practice, however, the receiver sees a received signal which comprises the far end signal and unwanted echoes of the near end transmitted signal. These echoes originate on the line, say due to bridged taps, and in the hybrid itself, due to finite transhybrid loss.

Because the line attenuates the signals, the far end signal arriving at the hybrid may be small compared to the echo. Consequently, sophisticated echo cancellers are used to extricate the far end signal.

There is currently a trend to higher bit rates -nominally 144 kB/second and above over existing two-wire lines. These increased rates exacerbate the echo cancellation problem because the far end signal incurs higher attenuation. Consequently, there is a need for an echo canceller with an improved cancellation ability, typically at least 65 dB, yet which is not unduly expensive or complex.

Conventional echo cancellers are usually of the transversal filter type or adaptive memory type. To achieve the improved performance with such echo cancellers would entail high costs due to the need for high precision components, high speed operation and, at least in the case of the transversal filter type, high speed processing. More specifically, the transversal filter echo canceller would need its usual digital/analogue converter to be high speed and high resolution. In cases where one is used, the same would apply to its analogue/digital converter. Similarly, the transversal filter coefficients would need to be increased in resolution or numbers of bits per coefficient. These longer coefficients would also need to be updated or recalculated in a shorter sample period due to the higher bit rate.

The memory type of echo canceller would also require a high resolution digital/analogue converter, possibly a high resolution A/D converter (where used), and a large memory which could result in a very long convergence time or time taken to reach maximum cancellation.

An object of the present invention is to mitigate the aforementioned problems of increased line attenuation without the use of high resolution, high speed components or increased speed of processing.

According to the present invention, an echo canceller for a full duplex, two-wire digital transmission system comprises at least two stages operative in tandem. The first stage comprises an adaptive filter which responds to the transmitted signal in providing a digital word which corresponds to a particular sequence of bits in the transmitted signal. A digital/analogue converter converts the digital word into an analogue signal. Differencing means subtracts this analogue signal from the received signal to provide a difference signal. The adaptive filter responds also to this difference signal in adapting the aforesaid digital word such that when said sequence in the transmitted signal recurs the analogue signal corresponding to the previously adapted digital word will tend to be a closer estimate to any echo component of the received signal corresponding to said sequence.

The echo canceller further comprises means for disabling, in the first stage, adaptation of said digital word when the difference signal has reached a predetermined degree of cancellation.

The second stage comprises an adaptive filter, a digital/analogue converter having an output range significantly less than that in the first stage, and differencing means. The adaptive filter is responsive to the same sequence in the transmitted signal as the first stage, to provide a digital word which is converted to an analogue signal by the digital/analogue converter. Differencing means subtracts the output of the low-range digital/analogue converter from the difference signal of the first stage to provide a second difference signal for supply to a receiver.

The second stage may respond to the whole of the sequence and the first stage respond to only a most recent part of the sequence, corresponding to the largest amplitude portion of the echo. With this embodiment it is not necessary for the first stage, with its ability to handle large amplitudes, to operate over the full duration of the echo, including the later period when the echo is relatively low in amplitude.

In preferred embodiments each adaptive filter comprises an adaptive memory device, for example a random access memory (RAM). The aforementioned sequences of the transmitted signal may then be stored, for example in a shift register, and used to address the memory.

Conveniently, a sample-and-hold device may convert the received signal into a "staircase" form similar to the output of the digital/analogue converter before application to the differencing circuit.

The means for disabling adaptation in the first stage may conveniently include time delay means initiated whenever canceller operation has commenced so as to enable adaptation and to disable adaptation after the time delay. The duration of the time delay may be arranged to be at least as long as the time taken for the first stage to converge, i.e. maximize its cancellation effect. Alternatively, the means for disabling may include means for detecting convergence of the first stage and switching means to stop the updating of the adaptive filter.

Brief Description of the Drawings

An embodiment of the invention will now be described, by way of example only and with reference to the accompanying drawings, in which:-

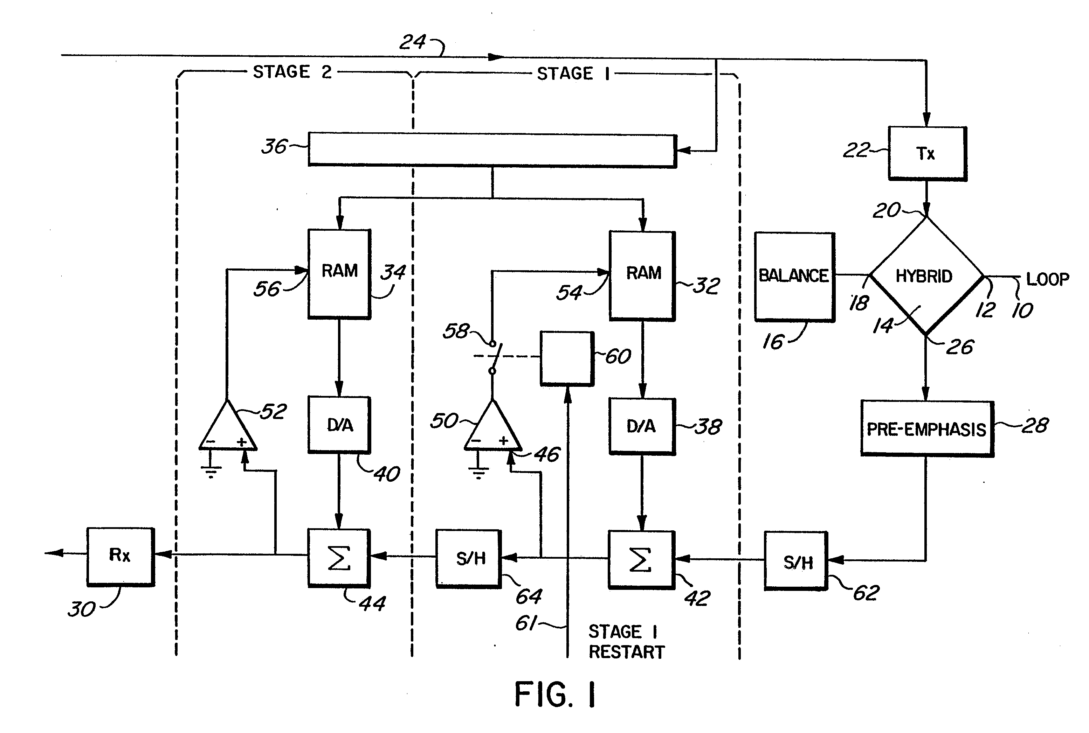

Figure 1 is a block diagram of an echo canceller;

Figure 2 is a block diagram of a modification to the echo canceller of Figure 1; and

Figure 3 is a diagram illustrating operation of the canceller.

A telephone line or subscriber loop 10 is shown connected to one port 12 of a hybrid 14. A balance network 16, of conventional construction, is connected to the opposite port 18. The third port 20 is connected to a transmitter or driver amplifier 22, the input of which is connected by line 24 to a data input which receives the digital signal to be transmitted. The fourth port 26 of the hybrid is connected to a pre-emphasis circuit 28 which, ultimately, is connected to a receiver 30.

Interposed between the receiver 30 and pre-emphasis circuit 28 are two similar echo canceller stages 1 and 2, respectively. The stages comprise random access memories 32 and 34, respectively, controlled by an addressing register 36. The data outputs of the RAMs 32 and 34 are connected to digital/analogue converters 38 and 40, respectively. The two digital/analogue converters 38 and 40 may both have the same number of gradations or steps in their operating ranges but the second stage digital/analogue converter 40 has a much smaller output range approximately equal to the minimum step or gradation in the range of the first stage digital/analogue converter 38. Consequently, digital/analogue converter 40, and hence the second stage, is capable of a smaller output step size than digital/analogue converter 38 and hence the first stage.

The outputs of digital/analogue converters 38 and 40 are connected to analogue differencing circuits 42 and 44, respectively. The outputs of the differencing circuits 42 and 44 are connected to non-inverting inputs 46 and 48, respectively, of corresponding comparators 50 and 52. The inverting inputs of comparators 50 and 52 are grounded. The respective outputs of comparators 50 and 52 are connected to "update" or read/modify/write inputs 54 and 56, respectively, of RAMs 32 and 34, the output of the first stage comparator 50 being by way of a normally closed switch 58. The switch 58 is controlled by convergence detection means 60, which has its input connected to the output of analogue differencing means 42.

The inputs of the analogue differencing circuits 42 and 44 are connected to sample-and-hold circuits 62 and 64, respectively. In the first stage, the input of sample-and-hold circuit 62 is connected to the output of the pre-emphasis circuit 28. In the second stage, the sample-and-hold circuit 64 is connected to the output of the first stage analogue differencing circuit 42. The output of the second stage analogue differencing circuit is also connected to receiver 30.

It should be noted that, although the second stage sample-and-hold circuit could be omitted -since the signal has already been in sampled/held form from the first stage - it is preferably retained because it also acts as a filter to limit transients caused by the dynamics of stage 1 reaching stage 2.

The input of addressing shift register 36 is connected to the data or signal input line 24. In operation a data signal, a random binary sequence of bits, is applied via line 24 to transmitter 22. The transmitter 22, which may comprise a driver amplifier of conventional form, applies a corresponding signal to the hybrid 14 and thence to the subscriber loop 10.

The received signal from the loop 10 comprises a binary data signal transmitted from the far end of the loop with superimposed echo of the near end transmitted signal. The echo comprises echo originating on the loop and echo due to finite transhybrid loss. The received signal is diverted by the hybrid 14 to the pre-emphasis circuit 28. The pre-emphasis circuit 28 boosts the high frequencies which tends to reduce the duration of the "tail" of the echo. The output of the pre-emphasis circuit 28 is converted into a time-sampled format by sample-and-hold circuit 62. The output of the sample-and-hold circuit thus has a "staircase" form with a step every sampling period.

Considering the transmitted data signal again, the signal on input line 24 is sampled at twice its bit rate and the resulting bits passed serially through the shift register 36. - (The number of samples per transmitted bit could be one or more than two, depending upon the application.) Thus, in normal operation, the shift register contains 2N samples of a sequence comprising the N most-recently transmitted bits, including the latest bit. The 2N bits which serve as the address for the RAMs 32 and 34, represent $2^{2N}$ possible unique patterns of the data signal. Each of the RAMs 32 and 34 has $2^{2N}$ corresponding memory locations. The value of N will be determined according to the particular application. In this embodiment N = 8, with 2 samples per transmitted bit. Each memory location contains a multibit word, in this case 16 bits.

When a particular bit is being transmitted, the N bit sequence comprising that bit and the preceding (N-1) transmitted bits, provides, via the shift register 36, which is clocked at twice the input signal rate, the 2N bit address for the RAM 32. The 16 bit binary word from the corresponding memory location of RAM 32 is applied to digital/analogue converter 38, which converts it to an analogue voltage of a particular value. Analogue differencing circuit 42 substracts the output from digital/analogue converter 42 from the discrete voltage level then appearing at the output of sample-and-hold circuit 46 to provide a difference signal.

This difference signal comprises the far-end or genuine received signal plus the residual transmitted signal echo which remains after cancellation. The far end signal is normally statistically independent of the transmitted signal, so correlation is used to minimize (i.e. cancel) the echo and leave the far end signal unaffected. In this embodiment, the sign algorithm is used to achieve cancellation.

Accordingly, comparator 50, compares the difference signal from differencing means 42 with zero and, depending upon the sign thereof, either adds or subtracts "1" from the contents of the appropriate memory location of RAM 32. This process is repeated every time that particular sequence appears in the input signal. When the accumulated errors in one direction exceed a certain value, a correction is made in the word applied to the digital/analogue converter so as to reduce the corresponding echo value. This cycle will repeat each time that sequence of bits occurs and similarly for all possible sequences, so that typically within a few seconds, the first stage of the echo canceller will converge. During the accumulation of errors -or updating of the word in memory -the digital/analogue converter does not necessarily respond because it responds to only the most significant 6-8 bits of its input word.

The digital/analogue converter 38 gives discrete output levels or gradations, so its voltage resolution is limited to its minimum gradation. When the first stage of the echo canceller has converged, the difference signal at the output of analogue differencing circuit 42 will still include an "echo" component that corresponds to the difference between the minimum level of digital/analogue converter 38 and the actual echo value at that sample. However, the second stage can continue to reduce the echo in the present embodiment because its digital/analogue converter 40 has a range equivalent to this minimum level of digital/analogue converter 38, subject to first stage adaptation being "frozen", as described below.

Thus, the first stage difference signal is applied to second stage sample-and-hold circuit 64 and thence to differencing circuit 44. The second stage memory, RAM 34, operates in like manner to that in the first stage to apply to digital/analogue converter 40 a binary word from a memory location corresponding to a particular combination of N bits in the data signal. It should be noted that in this example the same N bits are used for both the first stage memory 32 and the second stage memory 34. The output from digital/analogue converter 40 is subtracted from the output of sample-and-hold circuit 64 and the resulting second difference signal is used to update the contents of the RAM 34, as per the first stage, via comparator 52.

The cycle repeats for every shifted permutation of the transmitted bit stream, as before in stage 1, until the echo component of the difference signal is reduced to the amplitude of the minimum step size of digital/analogue converter 40. At this point, the echo component will be much lower in amplitude than the actual received signal which has not been affected by the cancellation process, as discussed previously. Thus the received signal has had the corrupting echo removed and is passed onto receiver 30 for data recovery and use as desired.

With digital/analogue converter 38 having resolution of $N_1$ bits and digital/analogue converter 40 having resolution of $N_2$ bits, and the output range of digital/analogue converter 40 equal to the minimum step size of digital/analogue converter 38, after convergence of both stages, the echo component amplitude at the output of difference circuit 44 will be reduced to a factor $2^{1/N_1 + N_2}$ times its original amplitude at the output of sample/hold 62. The echo has thus been reduced in size from many times higher than the received far end signal to many times smaller than same, facilitating recovery of the information contained in the far end signal. Thus, two digital/analogue converters with few bits of resolution can achieve the same amount of echo reduction (or "cancellation") as a single digital/analogue converter of higher resolution.

Other embodiments of the invention may, for reasons of practical concern, elect to make the full range of digital/analogue converter 40 larger than the minimum step size of digital/analogue converter 38.

In order for the second stage to further reduce the echo amplitude below the capability of stage 1 alone, updating of the memory 32 of the first stage must be discontinued and adaptation "frozen" as soon as it has converged. Such discontinuation is effected by opening switch 58 to disconnect the output of comparator 50 from the "update" input of RAM 32. Switch 58 is controlled by mode control means 60, as described later.

This "freezing" of adaptation in stage 1 has the following action. Whenever any specific transmitted bit pattern recurs, as indicated by shift register 36, the actual echo value passing through the hybrid 14 and resulting in sampled form at S/H 62 output is always the same (an assumption which is valid for the majority of practical situations). With stage 1 "frozen" in the converged state, RAM 32's output word in response to said sequence will always be the same value. Thus, the output of differencing circuit 42 will always exhibit the same echo residue on recurrence of that transmitted pattern. If RAM 34 in stage 2 is responsive to the same said transmitted pattern, it will upon convergence of stage 2 contain the necessary value to unambiguously further reduce the echo residue present at the output of summer 42 to the amplitude, as discussed previously, of the minimum step size of digital/analogue converter 40. Taking operation and convergence with all possible transmitted sequences, stage 2 can thus further reduce the echo residue of stage 1, for every possible transmitted sequence, to said minimum amplitude.

Switch 58 is controlled by mode control means 60. Means 60 operates under an external command, 61, the restart. When restart is requested, mode control means 60 closes switch 58 for a length of time sufficient to permit stage 1 to reconverge. After this time, switch 58 opens and stage 1 returns to the "frozen" mode and remains so until a new restart request occurs. Restart is activated by system operation consideration. Normally, since stage 1 is coarse, stage 2 continuously adapts to handle minor time varying echo changes, while stage 1 remains in the "frozen" mode. However, when the system is initialized or when other major echo path changes occur, a restart request is initiated to ensure that stage 1 is properly set.

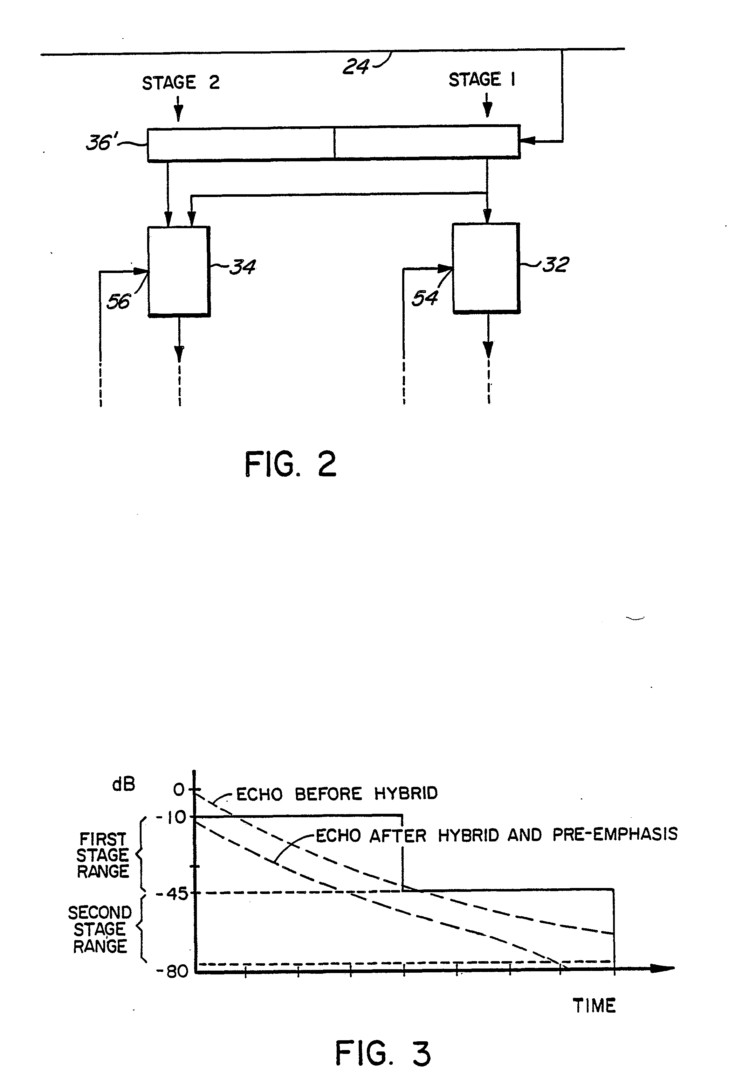

Various modifications are possible within the ambit of the present invention. For example, comparators 38 and 40 might be replaced by A/D converters. One specific modification is illustrated in Figure 2 and its operation illustrated in Figure 3.

The modified embodiment is specifically intended for an echo canceller for ISDN applications. In this case, the transmission bit rate is 160 kB/second. The shift register 36 and both sample/hold circuits, 62 and 64, operate at twice the bit rate, i.e. at 320 kHZ rate (for practical reasons) thus yielding 2 samples per transmitted bit. Shift register 36 is 16 bits in length. Stage 1 RAM 32 is addressed by only the first 8 bits of shift register 36. Thus, it cancels only the early, high amplitude portion of the echo (0-25 microseconds after the pulse is transmitted). Stage 2 RAM 34 is addressed by all 16 bits of shift register 36. Thus stage 2 cancels the residue of stage 1 plus the low amplitude portion of the echo from 25-50 microseconds after the pulse is transmitted. Sign detection of the echo residues is performed by comparators 50 and 52. Update inputs 54 and 56 to RAMs 32, 34, respectively, control digital accumulator circuitry of conventional design, to update RAM contents in read-modify-write fashion. As mentioned before, digital/analogue converters 38 and 40 have resolutions of 6 to 8 bits.

Operation of this specific embodiment is illustrated in Figure 3. The hybrid reduces the overall echo by about 10 dB in the worst case. The pre-emphasis network provides high-frequency boost to reduce the relative level of the low frequency "tail" of the pulse. This reduces the total number of bit periods over which the canceller needs to operate. After 8 sample periods (25 microseconds) the pulse tail has decayed below the amplitude of the stage 1 residue (i.e. the minimum step size of digital/analogue 38), so operating stage 1 for the second 8 sample periods is unnecessary. Stage 1 thus cancels only the higher amplitude portion of the echo, there by providing echo reduction of about 35 dB. The residue passed on to stage 2 comprises the reduced high level echo (first 25 microseconds) and the untouched low level echo (second 25 microseconds). Stage 2 cancels the remaining uncancelled echo.

7 bit digital/analogue conversion in both stages provides a combined cancellation capability of 70 dB. Thus, the total echo reduction available, including the hybrid, is 80 dB at 160 Kb/second.

An advantage of embodiments of the invention employing multistage operation is that they permit the resolution or accuracy of each digital/analogue converter to be reduced substantially relative to what would be required for a single stage echo canceller having an equivalent cancellation range. A further advantage of embodiments employing adaptive memory devices is that they are able to tolerate non-linearities in the received signal. Moreover, when memory devices are used in multi-stages, non-linearities are handled effectively without the long convergence times usually associated with adaptive memory echo cancellers. For example, such convergence time may be reduced by one or more orders of magnitude.

## Claims

1. An echo canceller for a full duplex, two-wire transmission system, comprising at least two canceller stages (1;2) operative in tandem, the first stage comprising:-

an adaptive filter (32; 50) responsive to a transmitted signal to provide a succession of digital words each corresponding to a different sequence of bits in said transmitted signal;

a digital/analogue converter (38) responsive to the output of the adaptive filter for converting each said digital word into an analogue signal;

differencing means (42) for subtracting said analogue signal from a received signal to provide a difference signal,

said adaptive filter further comprising means (50) responsive to said difference signal to adapt each digital word such that when the corresponding sequence of the transmitted signal recurs the digital word so adapted will produce a corresponding said analogue signal tending to be closer to matching any echo component of the received signal corresponding to said sequence;

the second stage comprising:-

a second adaptive filter (34; 52) responsive to a transmitted signal sequence that is at least partly the same as that to which the first stage is responsive, said second adaptive filter serving to provide a succession of second digital words each corresponding to a said different sequence of bits in said transmitted signal;

a second digital/analogue converter (40) responsive to the output of said second adaptive filter for converting each said second digital word into a second analogue signal, the range of said second analogue signal being significantly smaller than the range of the first analogue signal;

differencing means (44) responsive to said second digital/analogue converter (40) and to the first differencing means (42) for subtracting said second analogue signal from said difference signal to provide a second difference signal as the output of the echo canceller;

said second adaptive filter comprising means (52) responsive to said second difference signal to adapt each of said second digital words in such a way that when the corresponding sequence of the transmitted signal recurs each second digital word so adapted will produce a said second analogue signal tending to be closer to matching any echo component of said difference signal corresponding to said sequence;

said echo canceller further comprising means (60) for disabling adaptation of said digital words in the first stage adaptive filter when said first difference signal has reached a predetermined degree of cancellation.

2. An echo canceller as defined in claim 1, wherein each said adaptive filter comprises an adaptive memory device - (32, 34) and addressing means for such adaptive memory device comprising storage means for storing said sequence of the transmitted signal.

3. An echo canceller as defined in claim 2, wherein each said adaptive memory device comprises a random access memory, and means responsive to said difference signal for controlling a read/modify/write input of said random access memory.

4. An echo canceller as defined in claim 1, 2 or 3, wherein the second digital/analogue converter has an output range substantially equal to the minimum step of the output range of the first-mentioned digital/analogue converter.

5. An echo canceller as defined in claim 1, 2, or 3, wherein said means for disabling adaptation of the digital word comprises time delay means initiated on commencement of echo canceller operation to enable such adaptation and operative after the time delay to disable adaptation, said time delay being predetermined at a level greater than the convergence time of the first stage.

6. An echo canceller as defined in claim 4, wherein said means for disabling adaptation of the digital word comprises a time delay initiated on commencement of echo canceller operation to enable such adaptation and operative after the time delay to disable adaptation, said time delay being predetermined at a level greater than the convergence time of the first stage.

7. An echo canceller as defined in claim 4, wherein said means for disabling adaptation comprises detection means for detecting convergence of said first stage and switching means, responsive to said detection means for preventing adaptation of said digital word.

8. An echo canceller as defined in claim 1, 2 or 3, wherein each said means responsive to said difference signal is responsive to the sign of said difference signal in adapting said digital word.

9. An echo canceller as defined in claim 4, wherein each said means responsive to said difference signal is responsive to the sign of said difference signal in adapting said digital word.

10. An echo canceller as defined in claim 5, wherein each said means responsive to said difference signal is responsive to the sign of said difference signal in adapting said digital word.

11. An echo canceller as defined in claim 6, wherein each said means responsive to said difference signal is responsive to the sign of said difference signal in adapting said digital word.

12. An echo canceller as defined in claim 7, wherein each said means responsive to said difference signal is responsive to the sign of said difference signal in adapting said digital word.

13. An echo canceller as defined in claim 1, 2 or 3, wherein said first stage further comprises sample-and-hold means for converting the received signal from said hybrid into a time-sampled format for application to said differencing means.

14. An echo canceller as defined in claim 13, wherein said second stage further comprises sample-and-hold means connected between the output of the first differencing means and the input of the second differencing means.

15. An echo canceller as defined in any preceding claim, wherein said first stage and said second stage are responsive to the same sequence of the transmitted signal.

16. An echo canceller as defined in any of claims 1 to 14, wherein said first stage is responsive to a sequence that is shorter than the sequence to which said second stage responds, the first stage sequence being the earlier occurring part of the second stage sequence and corresponding to the higher amplitude part of the echo.

FIG. I

STAGE 2

STAGE 1

*24*

*36'*

*~34*

*~32*

*56*

*54*

# FIG. 2

dB

0 — ECHO BEFORE HYBRID

-10

FIRST
STAGE
RANGE

ECHO AFTER HYBRID AND PRE-EMPHASIS

-45

SECOND
STAGE
RANGE

-80

TIME

# FIG. 3

## DOCUMENTS CONSIDERED TO BE RELEVANT

EP 86300458.6

| Category | Citation of document with indication, where appropriate, of relevant passages | Relevant to claim | CLASSIFICATION OF THE APPLICATION (Int. Cl.4) |
|---|---|---|---|
| Y | DE - A1 - 3 238 564 (WESTERN ELECTRIC)  * Fig. 1; abstract * | 1-3 | H 04 B 3/23 |
| Y | EP - A2 - 0 063 638 (SIEMENS)  * Fig. 2; abstract * | 1-3 | |
| A | EP - A1 - 0 044 598 (TELECOMMUNICATIONS RADIOELECTRIQUES ET TELEPHONIQUES)  * Fig. 2; abstract * | 1 | |
| A | PROCEEDINGS OF THE IEEE, vol. 65, no. 3, March 1977, New York  Nicholas Demytko and Kevin S. English "Echo Cancellation on Time-Variant Circuits" pages 444-453  * Fig. 13 * | 1 | |
| A | GB - A - 2 109 208 (WESTERN ELECTRIC)  * Fig. 1 * | 1-3 | |

TECHNICAL FIELDS SEARCHED (Int. Cl.4)

H 04 B 3/00

H 04 L 25/00

The present search report has been drawn up for all claims

| Place of search | Date of completion of the search | Examiner |
|---|---|---|
| VIENNA | 28-05-1986 | DRÖSCHER |